Europäisches Patentamt

European Patent Office

Office européen des brevets

(19)

(11)  EP 1 273 606 A1

(12)  EUROPEAN PATENT APPLICATION
published in accordance with Art. 158(3) EPC

(43) Date of publication:
08.01.2003  Bulletin 2003/02

(51) Int Cl.⁷: **C08G 18/65**, D01F 6/70

(21) Application number: 00913100.4

(86) International application number:
PCT/JP00/02177

(22) Date of filing: 04.04.2000

(87) International publication number:
WO 01/074922 (11.10.2001 Gazette 2001/41)

(84) Designated Contracting States:
AT BE CH CY DE DK ES FI FR GB GR IE IT LI LU
MC NL PT SE
Designated Extension States:
AL LT LV MK RO SI

(71) Applicant: BATTELLE MEMORIAL INSTITUTE
Columbus Ohio 43201-2693 (US)

(72) Inventors:
• MASUI, Takashi,
Toyo Boseki K. K., Research Center
Ohtsu-shi, Shiga 520-0292 (JP)

• FUJIE, Tsutomu
Toyo Boseki K. K., Tsuruga Plant
Tsuruga-shi, Fukui 914-0813 (JP)
• ISHIMARU, Futoshi
Toyo Boseki K. K. Tsuruga Plant
Tsuruga-shi, Fukui 914-8550 (JP)

(74) Representative:
Bunke, Holger, Dr.rer.nat. Dipl.-Chem.
Prinz & Partner GbR
Manzingerweg 7
81241 München (DE)

(54)  **POLYURETHANE AND ELASTIC FIBER OBTAINED THEREFROM**

(57)    The polyurethane of the present invention comprises a high molecular weight polyol, an organic polyisocyanate, and a low molecular weight polyol, and has a crosslinked structure. The bonds forming the crosslinked points in the polyurethane comprise urethane bonds formed by the reaction of aromatic hydroxyl groups and aliphatic isocyanato groups and/or urethane bonds formed by the reaction of aromatic hydroxyl groups and benzylic isocyanato groups, being 0.1 to 50% of the total urethane bonds. The polyurethane of the present invention is superior in elastic recovery, and the urethane bonds of the crosslinked points reversibly dissociate and bond beyond a certain temperature. Consequently, it is possible to manufacture, from this polyurethane, an elastic fiber which has a high heat setting rate above a certain temperature, and which has elastic recovery after a heat setting process which is as superior as the elastic recovery before the heat setting process.

EP 1 273 606 A1

**Description**

TECHNICAL FIELD

The present invention relates to a polyurethane characterized by superior elastic recovery and reversible dissociation and bonding, beyond a certain temperature, of urethane bonds forming crosslinked points, and to an elastic fiber obtained from this polyurethane, wherein when the elastic fiber is woven into a cloth, or the like, a high heat setting rate above a certain temperature and superior elastic recovery after a heat stetting step, which recovery is as superior as before the heat setting step.

BACKGROUND ART

Conventionally, a high molecular weight diol, an organic diisocyanate, and a low molecular weight diol are frequently used for the production of polyurethane, and particularly a polyurethane elastic fiber. However, the polyurethane produced therefrom does not necessarily show satisfactory elastic recovery. In particular, in the field of elastic fibers, when an elastic fiber manufactured from such a polyurethane is woven into a cloth and passed through a heat setting step, it characteristically shows a high heat setting rate, but shows unsatisfactory elastic recovery of the polyurethane elastic fiber after the setting.

As the material for the polyurethane elastic fiber, polyurethane urea in which a low molecular weight diamine is used instead of the low molecular weight diol has been widely used. Since polyurethane urea has urea bonds having strong hydrogen binding capability, it shows high heat stability and highly satisfactory elastic recovery after the heat setting step, to almost the same level as before the heat setting step, but has the problem of a low heat setting rate. In other words, an elastic fiber showing high heat setting rate and superior elastic recovery, particularly after a heat setting step, cannot be obtained by conventional techniques. This is because polyurethane having such characteristics has not been obtained so far.

While not having direct bearing on polyurethane, a rubber crosslinked by vulcanization, or the like, has, due to the chemical crosslinking, superior heat stability and superior elastic recovery. However, the forming of such a chemically crosslinked polymer into an article, and particularly forming it into an elastic fiber, is extremely difficult and speaking from the point of view of heat setting, the fiber shows a very low heat setting rate.

It is therefore an object of the present invention to provide a polyurethane from a high molecular weight polyol, an organic polyisocyanate and a low molecular weight polyol, which shows superior elastic recovery of the same level as in a chemically crosslinked rubber, and a polyurethane elastic fiber obtained therefrom, which achieves a high heat setting rate above a certain temperature and show superior elastic recover even after a heat setting step, to the same level as before the heat setting step.

DISCLOSURE OF INVENTION

The present inventors have conducted intensive studies in order to achieve the above-mentioned objects and completed the present invention. In more detail, the present invention is as follows.

(1) A polyurethane comprising a high molecular weight polyol, an organic polyisocyanate, and a low molecular weight polyol, and having a crosslinked structure, wherein bonds which form crosslinked points within the polyurethane comprise at least one type of urethane bond from urethane bonds formed by a reaction of aromatic hydroxyl groups and aliphatic isocyanato groups, or urethane bonds formed by a reaction of aromatic hydroxyl groups and benzylic isocyanato groups, a proportion of the urethane bonds being 0.1-50% of all the urethane bonds in the polyurethane.

(2) A polyurethane according to (1) above, comprising as a polymerization component a multifunctional compound having two aliphatic hydroxyl groups and at least one aromatic hydroxyl group.

(3) A polyurethane according to (1) above, wherein one component of the low molecular weight polyol is a multifunctional compound having two aliphatic hydroxyl groups and at least one aromatic hydroxyl group.

(4) A polyurethane according to (1) above, wherein the bonds forming the crosslinked points within the polyurethane comprise urethane bonds formed by a reaction of the aromatic hydroxyl groups and the aliphatic isocyanato groups, or urethane bonds formed by a reaction of aromatic hydroxyl groups and benzylic isocyanato groups.

(5) A polyurethane according to one of (1) to (4) above, wherein the proportion of the urethane bonds at the crosslinked points of the polyurethane is 0.2 to 15% of the total urethane bonds of the polyurethane.

(6) An elastic fiber produced from a polyurethane according to any one of (1) to (5) above.

(7) An elastic fiber according to (6) manufactured by melt spinning.

In the following, the present invention is explained in detail.

The polyurethane of the present invention has a crosslinked structure. The crosslinked structure of polyurethane may be afforded by copolymerization of multifunctional compounds, and by allophanate crosslinking and biuret crosslinking by adding the isocyanate component in excess. The crosslinking in the present invention mostly means that afforded by copolymerization of a multifunctional compound, but it may also include allophanate crosslinking and biuret crosslinking.

The multifunctional compound necessary for the crosslinked structure may be contained as one component of any of a high molecular weight polyol, an organic polyisocyanate or a low molecular weight polyol. However, in view of the synthesis of these starting materials and the ease of polymerization of the polyurethane, it is preferable contained as the one component of a low molecular weight polyol.

In the present invention, a multifunctional compound having three or more functional groups of which at least one is an aromatic hydroxyl group, and preferably, a compound having three or more functional groups of which at least two are aliphatic hydroxyl groups and at least one is an aromatic hydroxyl group, is used as the multifunctional compound. Specific compounds, for example, may be 3,5-bis(2-hydroxyethoxycarbonyl)phenol, 2,5-bis(2-hydroxyethoxycarbonyl)hydroquinone, 2-((4-hydroxybenzyl)oxy)-1,3-propanediol, 2-((4-hydroxybenzoyl)oxy,-1,3-propanediol and the like. These multifunctional compounds may be used alone or in combination.

The high molecular weight polyol to be used in the present invention is exemplified by polyether polyol which is typically polytetramethylene ether glycol; polyester polyol which is typically polybutylene adipate; polycaprolactone polyol; polyester polycarbonate polyol such as a reaction product of polyester glycol (e.g., polycaprolactone) and alkylene carbonate; one obtained by reacting ethylene carbonate with a polyhydroxy alcohol (e.g., ethylene glycol, propylene glycol, butylene glycol, and neopentyl glycol) and then reacting the resulting reaction mixture with organic dicarboxylic acid (e.g., adipic acid, azelaic acid, and sebacic acid); and polycarbonate polyol obtained by ester exchange reaction of polyhydroxyl compound (e.g., 1,4-butanediol, 1,6-hexanediol, 2,2-dimethyl-1,3-propanediol, and 1,8-octanediol) and aryl carbonate (e.g., diphenylcarbonate). These high molecular weight polyols may be used alone or in combination.

As the low molecular weight polyol used in the present invention, in addition to the above-mentioned multifunctional compounds, ethylene glycol, propylene glycol, 1,4-butanediol, 1,6-hexanediol, 1,4-bis(2-hydroxyethoxy)benzene, 1,3-bis(2-hydroxyethoxy)benzene, 1,2-bis(2-hydroxyethoxy)benzene, cyclohexanedimethanol, bis(2-hydroxyethyl)terephthalate, bis(2-hydroxyethyl) isophthalate, bis(2-hydroxyethyl) phthalate, 2,2-bis(4-(2-hydroxyethoxy)-phenyl) propane, and the like can be mentioned. These low molecular weight polyols may be used alone or in combination.

The organic polyisocyanate used in the present invention is a compound having two or more isocyanate groups, for example, aromatic diisocyanate (e.g., 4,4'-diphenylmethane diisocyanate, 1,5-naphthalene diisocyanate, 1,4-phenylene diisocyanate, 2,4-tolylene diisocyanate, and 2,6-tolylene diisocyanate), benzylic diisocyanate (e.g., m-xylylene diisocyanate, and p-xylylene diisocyanate), aliphatic diisocyanate (e.g., hexamethylene diisocyanate), and alicyclic diisocyanate (e.g., 1,4-cyclohexane diisocyanate, 4,4'-dicyclohexylmethane diisocyanate, and isophorone diisocyanate). These may be used alone or in combination.

Note that, in the present invention, it is necessary to select the type and amount of high molecular weight polyol, organic polyisocyanate, and low molecular weight polyol used such that the proportion of at least one type of urethane bond from the urethane bonds obtained by the reaction of an aromatic hydroxyl group of the above mentioned multifunctional compounds and an aliphatic isocyanato group, and the urethane bonds obtained by the reaction of an aromatic hydroxyl group of the above mentioned multifunctional compounds and a benzylic isocyanato group is 0.1 to 50% of the total urethane bonds of the polyurethane obtained using these compounds.

In the polyurethane of the present invention, the ratio of the high molecular weight polyol to the low molecular weight polyol can vary depending on their molecular weights, the desired properties of the polyurethane and the like. However, the amount of the above-mentioned multifunctional compound used is preferably 0.25 to 50 mol%, and more preferably 0.5 to 40 mol%, of the total polyol component. The amount of the above-mentioned high molecular weight polyol used is preferable 10 to 99.8 mol%, and more preferably 20 to 89.5 mol%, of the total polyol component. The amount of the low molecular weight polyol other than the above-mentioned multifunctional compound is preferably 0 to 89.8 mol%, and more preferably 10 to 79.5 mol% of the total polyol component.

In addition, the ratio (NCO/OH) of the number of isocyanato groups in the organic polyisocyanate to the total number of the hydroxyl groups in the high molecular weight polyol and the low molecular weight polyol is within the range of 0.80 to 1.25, and preferably 0.95 to 1.15. When this ratio is too small, the crosslinked structure of the obtained polyurethane becomes insufficient and elastic recovery decreases unpreferably. On the other hand, when it is too large, the melt viscosity of the obtained polyurethane becomes smaller, the solidification speed becomes slow, and the surface adhesiveness becomes greater to lower the productivity, which is unpreferable.

In the crosslinked structure of the polyurethane of the present invention, the bonds which form the crosslinked points include at least one type of urethane bond from the urethane bonds obtained by the reaction of an aromatic hydroxyl group of the above mentioned multifunctional compounds and an aliphatic isocyanato group, and the urethane bonds obtained by the reaction of an aromatic hydroxyl group of the above mentioned multifunctional compounds and a benzylic isocyanato group. Preferably, these bonds which form the crosslinked points include urethane bonds obtained by the reaction of an aromatic hydroxyl group of the above mentioned multifunctional compounds and an aliphatic isocyanato group, or urethane bonds obtained by the reaction of an aromatic hydroxyl group of the above mentioned multifunctional compounds and a benzylic isocyanato group.

The proportion of these urethane bonds is 0.1 to 50%, and preferably 0.2 to 15% of the total urethane bonds of the polyurethane. When the proportion of these urethane bonds is less than 0.1%, sufficient elastic recovery cannot be obtained. On the other hand, when the proportion exceeds 50%, the urethanization reaction rate of aromatic hydroxyl groups becomes slow, and as a result, the forming properties of the obtained polyurethane become poor.

The above-mentioned ratio of the urethane bonds obtained by the reaction of an aromatic hydroxyl group of the above-mentioned multifunctional compounds and an aliphatic isocyanato group, and by the reaction of an aromatic hydroxyl group of the above-mentioned multifunctional compounds and a benzylic isocyanato group can be obtained by, for example, reacting polyurethane with alcohol, amine, and the like under heating to give a soluble polymer, which is then subjected to NMR analysis, or the like.

Since one component of the polyurethane of the present invention is a multifunctional compound having three or more functional groups comprising at least one aromatic hydroxyl group, and is preferably a multifunctional compound having three or more functional groups comprising two aliphatic hydroxyl groups and at least one aromatic hydroxyl group, the polyurethane has a crosslinked structure. In general, polyurethane binds soft segments by the cohesive power due to the hydrogen bonds of hard segments and shows a rubber-like property. When crosslinking by strong chemical bond is combined with the hydrogen bond as the cohesive power of the hard segment, elastic recover is expected to improve.

In the crosslinked structure of the polyurethane of the present invention, the bonds of the crosslinked points include at least one type of urethane bond from urethane bonds formed by the reaction of aromatic hydroxyl groups of the above-mentioned multifunctional compound and aliphatic isocyanato groups, or urethane bonds formed by the reaction of aromatic hydroxyl groups of the above-mentioned multifunctional compound and benzylic isocyanato groups. Therefore, compared to the urethane bonds in the main chain, which are made by aliphatic hydroxyl groups and isocyanato groups, it affords reversible dissociation and bonding at lower temperatures. Utilizing this characteristic, it has become possible to develop a polyurethane elastic fiber having a high heat setting rate and showing superior elastic recovery before and after a heat setting step, which has been unattainable to date using the techniques of the field of elastic fibers.

That is, since the polyurethane elastic fiber obtained from this polyurethane have a crosslinked structure at room temperature, they show superior elastic recovery. When the heat setting temperature is set above the temperature at which the urethane bonds (at least one type of urethane bond from urethane bonds formed by the reaction of aromatic hydroxyl groups of the above-mentioned multifunctional compound and aliphatic isocyanato groups, or urethane bonds formed by the reaction of aromatic hydroxyl groups of the above-mentioned multifunctional compound and benzylic isocyanato groups) forming the crosslinked points are dissociated, the urethane bonds of these crosslinks are broken at the heat setting temperature, thereby affording a high heat setting property. When they are cooled again to room temperature, crosslinking occurs by the re-formation of the above-mentioned urethane bonds, and therefore, the polyurethane elastic fiber shows superior elastic recovery after the heat setting step. Moreover, since the urethane bonds forming the crosslinked points are at least one type of urethane bond from urethane bonds formed by the reaction of aromatic hydroxyl groups of the above-mentioned multifunctional compound and aliphatic isocyanato groups, or urethane bonds formed by the reaction of aromatic hydroxyl groups and benzylic isocyanato groups, the dissociation starting temperature of these urethane bonds is higher than the dyeing temperature (when weaving with nylon fiber: 105°C, when weaving with ester fiber: 130°C). In other words, under the dyeing conditions, the urethane bonds forming the crosslinked points do not dissociate, and the crosslinked points remain stable after the dyeing step.

The polyurethane of the present invention can be produced by applying a known urethanization technique such as a melting method, a solution method, or the like. In consideration of cost and working environment, production by a melting method is preferable. Where necessary, a multifunctional component such as other triols, triisocyanates, and the like may be simultaneously used.

When producing polyurethane, catalysts, activators, defoaming agents, lubricants, stabilizers (e.g., ultraviolet absorbers, yellowing prevention agents, and the like), pigments, antistatic agents, surface treating agents, flame retardants, anti-mold agents, and reinforcing agents, which are conventionally used, may be optionally used in accordance with necessity.

The polyurethane of the present invention can be used broadly such as in resins, molded articles, films, elastic fibers, and the like. When it is prepared into an elastic fiber, superior elastic recovery and high heat setting rate can be achieved. In addition, the polyurethane elastic fiber of the present invention can be produced by a spinning method such as melt spinning, dry spinning, wet spinning, and the like. From the aspects of cost, homogeneity of the fiber, and the like, melt spinning is preferable.

The spinning device and spinning conditions for the melt spinning in the present invention may vary depending on the composition of the polyurethane, the size of the desired elastic fiber, the polymerization method, and the like. However, typically, it is preferable that a molten polymer be fed into an extruding type spinning device, and spun at a spinning temperature of 180 - 240°C and a spinning rate of not more than 1000 m/min, and in particular, not more than 600 m/min. The apparent draft ratio is preferably not less than 50, and preferably not less than 100. The spinning tension when the spun filament is wound around a bobbin by a winder is not more than 0.1 g/d, and preferably not more than 0.05 g/d.

The wound filament is preferably heat treated at a temperature near the glass transition temperature of the hard segment under low humidity to allow sufficient progress of the phase separation of the hard segment from the soft segment. By these methods, a polyurethane elastic fiber having a size of about 5 - 100 denier/filament can be generally obtained. The polyurethane elastic fiber of the present invention is suitably of 15 - 100 denier, and preferably 20 - 80 denier. These elastic fibers are used as a covering yarn and a naked yarn.

The present invention is explained in detail in the following by way of Examples, which do not limit the present invention in any way. In the Examples, "part" means "part by weight". Moreover, the elastic recovery rate and heat setting rate were measured by the following methods.

Polymer Synthetic Method

The urethane bonds forming the crosslinked points need to include at least one type of urethane bond from urethane bonds formed by the reaction of an aromatic hydroxyl group of the above-mentioned multifunctional compounds and an aliphatic isocyanato group, or urethane bonds formed by the reaction of an aromatic hydroxyl group of the above-mentioned multifunctional compounds and a benzylic isocyanato group, unlike urethane bond of the main chain. Therefore, a polymer before crosslinking (having a pendant aromatic hydroxyl group and containing the above-mentioned multifunctional compound as a component) and a crosslinking agent (having two or more isocyanato groups, these isocyanate groups being aliphatic isocyanato groups and/or benzylic isocyanato groups) were separately synthesized, and the two were then reacted.

Preparation of Sample for Evaluation

A polyurethane polymer was sandwiched between two Teflon sheets and prepared into an about 0.1 mm thick film by a heat press machine at 215°C. The preparation method of the elastic fiber is disclosed in the following Examples.

Measurement of Elastic Recover Rate: Film

A sample (a film having a width of 5 mm and a thickness of about 0.1 mm) was held by chucks at a sample length of 50 mm and, using a tensile tester, stretched 300% at a constant speed of 1000%/min. Immediately after stretching, the sample was relaxed at the same speed. The 150% pulling stress in the stretching process and the 150% pulling stress in the relaxing process were measured and used for the calculation by the following formula.

$$\text{Elastic recovery (\%) = (150\% pulling stress in relaxing process}$$

$$/ \text{ 150\% pulling stress in stretching process) X 100}$$

The elastic recovery after the heat setting step was measured by carrying out a heat treatment on a film in the same manner (heat treatment under 100% stretching) as described in the heat setting rate measurement mentioned later, and the elastic recovery rate of the film was measured in the same manner as above.

Measurement of Elastic Recovery Rate: Fiber

A sample (40 denier, monofilament) was held by chucks at a sample length of 50 mm and, using a tensile tester, stretched 300% at a constant speed of 1000%/min. Immediately after stretching, the sample was relaxed at the same speed. The 150% pulling stress in the stretching process and the 150% pulling stress in the relaxing process were measured and used for the calculation by the following formula.

$$\text{Elastic recovery (\%) = (150\% pulling stress in relaxing process}$$

/ 150% pulling stress in stretching process) X 100

The elastic recovery after the heat setting step was measured by carrying out a heat treatment on an elastic fiber in the same manner (heat treatment under 100% stretching) as described in the heat setting rate measurement mentioned later, and the elastic recovery rate of the fiber was measured in the same manner as above.

Measurement of Heat Setting Rate: Film

A sample (a film having a width of 2 mm, and a thickness of about 0.1 mm) was held at an initial length of 20 mm, heated at a constant temperature (dry heat) for 10 min under 100% stretching, and the sample length upon relaxing after cooling was measured. The heat setting rate was obtained from the following formula.

Heat setting (%) = {(sample length after heating - initial length) /

initial length} X 100

Measurement of Heat Setting Rate: Fiber

A sample (40 denier, monofilament) having an initial length of 22.5 cm was heated at a constant temperature (dry heat) for 1 min under 100% stretching, and the sample length upon relaxing after cooling was measured. The heat setting rate was obtained from the following formula.

Heat setting (%) = {(sample length after heating - initial length) /

initial length} X 100

Synthetic Example 1

As shown in Table 1, polybutylene adipate (abbreviated as PBA, 58.5 parts) having hydroxyl groups at both terminals and a number average molecular weight of 1950, 1,4-butanediol (abbreviated as BD, 4.05 parts); 3,5-bis (2-hydroxyethoxycarbonyl)phenol (abbreviated as BHP, 1.35 parts), and diphenylmethane diisocyanate (abbreviated as MDI, 19.75 parts) were respectively fed into a twin-screw extruder continuously to allow continuous melt-polymerization at 240°C to be carried out, whereby a polyurethane having an OH group concentration of 83.68 meq/kg on calculation was obtained. As a result of $^1$H-NMR analysis, the obtained polyurethane was confirmed to contain aromatic hydroxyl groups in an amount almost corresponding to the charged BHP and in an unreacted state. This polymer before crosslinking was used as Polymer 1.

Synthetic Examples 2, 3, 4

The process followed Synthetic Example 1 except that the amounts of BD and BHP added were changed to those shown in Table 1. The obtained polymers before crosslinking were used as Polymer 2, Polymer 3 and Polymer 4, respectively.

Synthetic Example 5

The process followed Synthetic Example 1 except that BHP (1.35 parts) was changed to 2-((4-hydroxybenzoyl)oxy)-1,3-propanediol (abbreviated as HPD, 1.06 parts). The obtained polymer before crosslinking was used as Polymer 5.

Synthetic Examples 6, 7

The process followed Synthetic Example 1 except that BHP was not added and the amounts of addition as shown in Table 1 were employed. The obtained polymers before crosslinking were used as Polymer 6 and Polymer 7, respectively.

Synthetic Example 8

The process followed Synthetic Example 1 except that the amounts of BD and BHP added were changed to those shown in Table 1. The obtained polymer before crosslinking was used as Polymer 8.

Synthetic Example 9

As shown in Table 2, isophorone diisocyanate (abbreviated as IPDI, 22.2 parts) and BD (4.5 parts) were stirred at 80°C for 60 minutes to give a crosslinking agent having an isocyanato group at the terminal, which has an NCO group concentration of 3745 meq/kg. The obtained crosslinking agent was used as Crosslinking agent 1.

Synthetic Example 10

The process followed Synthetic Example 9 except that, instead of BD (4.5 parts), poly(ε-caprolactone) (abbreviated as PCL, 26.3 parts) having hydroxyl groups on both terminals and a number average molecular weight of 526 was added. The obtained crosslinking agent was used as Crosslinking Agent 2.

Synthetic Example 11

The process followed Synthetic Example 10 except that, instead of IPDI (22.2 parts), m-xylylene diisocyanate (abbreviated XDI, 18.8 parts) was added. The obtained crosslinking agent was used as Crosslinking agent 3.

Table 1

|  | Polymer 1 | Polymer 2 | Polymer 3 | Polymer 4 |
|---|---|---|---|---|
| High molecular weight polyol, parts by weight (relative mole %) | PBA 58.5 (30) | PBA 58.5 (30) | PBA 58.5 (30) | PBA 58.5 (30) |
| Low molecular weight polyol, parts by weight (relative mole %) | BD 4.05 (45) | BD 3.6 (40) | BD 1.8 (20) | BD 4.455 (49.5) |
|  | BHP 1.35 (5) | BHP 2.7 (10) | BHP 8.1 (30) | BHP 0.135 (0.5) |
| Organic polyisocyanate parts by weight (relative mole%) | MDI 19.75 (79) | MDI 19.75 (79) | MDI 19.75 (79) | MDI 19.75 (79) |
| OH group concentration | 83.68 meq/kg | 141.93 meq/kg | 363.02 meq/kg | 30.18 meq/kg |
|  | Polymer 5 | Polymer 6 | Polymer 7 | Polymer 8 |
| High molecular weight polyol, parts by weight (relative mole %) | PBA 58.5 (30) | PBA 58.5 (30) | PBA 58.5 (30) | PBA 58.5 (30) |
| Low molecular weight polyol, parts by weight (relative mole %) | BD 4.05 (45) | BD 4.5 (50) | BD 4.5 (50) | BD 4.4955 (49.95) |
|  | HPD 1.06(5) |  |  | BHP 0.0135 (0.05) |
| Organic polyisocyanate parts by weight (relative mole%) | MDI 19.75 (79) | MDI 20 (80) | MDI 19.75 (79) | MDI 19.75 (79) |
| OH group concentration | 83.97 meq/kg | 0 meq/kg | 24.17 meq/kg | 24.47 meq/kg |

Table 2

| | Crosslinking Agent 1 | Crosslinking Agent 2 | Crosslinking Agent 3 |
|---|---|---|---|
| Organic polyisocyanate, parts by weight (relative moles %) | IPDI 22.2 (100) | IPDI 22.2 (100) | XDI 18.8 (100) |
| High/low molecular weight polyol, parts by weight (relative mole %) | BD 4.5 (50) | PCL 26.3 (50) | PCL 26.3 (50) |
| NCO group concentration | 3745 meq/kg | 2062 meq/kg | 2217 meq/kg |

Example 1

Polymer 1 and Crosslinking agent 1 were melt-mixed in a kneader at a weight ratio of 44.8 to 1 to make the NCO/OH ratio 1.0, whereby a crosslinked polymer was obtained. A film obtained by melt-forming using a heat press machine was subjected to the measurement as Example 1. The measurement results of various properties are shown in Table 3.

Examples 2-7

A film was obtained using the combination shown in Table 3, by the same process followed in Example 1. The measurement results of various properties are shown in Table 3.

Comparative Examples 1,2

Polymer 6 and Polymer 1 were melt-formed using a heat press machine to give films. The films were subjected to the measurements as Comparative Example 1 and Comparative Example 2. The measurement results of various properties are shown in Table 4.

Comparative Examples 3, 4

Films were obtained using the combination shown in Table 4, by the same process followed in Example 1. The measurement results of various properties are shown in Table 4.

Table 3

| | Example 1 | Example 2 | Example 3 | Example 4 | Example 5 | Example 6 | Example 7 |
|---|---|---|---|---|---|---|---|
| Polymer before crosslinking/ crosslinking agent | Polymer 1/ crosslinking agent 1 | Polymer 1/ crosslinking agent 2 | Polymer 2/ crosslinking agent 2 | Polymer 3/ crosslinking agent 2 | Polymer 4/ crosslinking agent 2 | Polymer 2/ crosslinking agent 3 | Polymer 5/ crosslinking agent 2 |
| mixing weight ratio | 44.8/1 | 24.6/1 | 14.5/1 | 5.7/1 | 68.3/1 | 15.6/1 | 24.6/1 |
| Kind of urethane bond at crosslinked point | Aromatic OH + aliphatic NCO | Aromatic OH + aliphatic NCO | Aromatic OH + aliphatic NCO | Aromatic OH + aliphatic NCO | Aromatic OH + aliphatic NCO | Aromatic OH + benzylic NCO | Aromatic OH + aliphatic NCO |
| Urethane bond amount at crosslinked point (% in total urethane bond) | 2.9 | 2.9 | 5.5 | 13.5 | 0.3 | 5.5 | 2.9 |
| Heat setting (%) | | | | | | | |
| 120°C | 31 | 33 | 29 | 19 | 37 | 28 | 31 |
| 130°C | 43 | 44 | 40 | 35 | 48 | 40 | 41 |
| 140°C | 52 | 54 | 50 | 47 | 59 | 85 | 52 |
| 145°C | 61 | 63 | 60 | 55 | 67 | 89 | 62 |
| 150°C | 89 | 88 | 86 | 82 | 91 | 96 | 89 |
| 155°C | 95 | 93 | 88 | 86 | 97 | 100 | 92 |
| Elastic Recovery (%) | 27 | 24 | 33 | 46 | 19 | 35 | 22 |
| Elastic Recovery (%) after heat setting (setting temp.) | 24 (150°C) | 19 (150°C) | 35 (150°C) | 42 (150°C) | 15 (150°C) | 36 (140°C) | 19 (150°C) |

Table 4

| | Comp. Ex. 1 | Comp. Ex. 2 | Comp. Ex. 3 | Comp. Ex. 4 |
|---|---|---|---|---|
| Polymer before crosslinking/crosslinking agent mixing weight ratio | Polymer 6 | Polymer 1 | Polymer 7/crosslinking agent 2 85.3/1 | Polymer 8/crosslinking agent 2 84.3/1 |
| Kind of urethane bond at crosslinked point | none | none | none | Aromatic OH + aliphatic NCO |
| Urethane bond amount at crosslinked point (% in total urethane bond) | 0 | 0 | 0 | 0.03 |
| Heat setting (%) 120°C 130°C 140°C 145°C 150°C 155°C | 45 69 87 90 98 100 | 52 71 86 88 92 melt-broken | 50 68 82 87 91 98 | 49 65 80 88 91 94 |
| Elastic Recovery (%) | 12 | 14 | 12 | 14 |
| Elastic Recovery (%) after heat setting (setting temp.) | 4 (140°C) | 2 (140°C) | 5 (140°C) | 6 (140°C) |

Example 8, Comparative Example 5

The crosslinked polymers obtained in Example 1 and Comparative Example 1 were melt-spun using a single-screw extruder-spinning machine at a spinning temperature of 210°C and a spinning rate of 500 m/min to give elastic fibers (40 denier, monofilament). The fibers were subjected to the measurements as Example 8 and Comparative Example 5. The measurement results of the various properties thereof are shown in Table 5.

Example 9

The molten crosslinked polymer obtained by melt mixing in Example 2 was, without solidification, fed into a spinning machine and melt-spun at a spinning temperature of 208°C and a spinning rate of 500 m/min to give an elastic fiber (40 denier, monofilament). The fiber was subjected to the measurements as Example 9. The measurement results of the various properties thereof are shown in Table 5.

Table 5

| | Example 8 | Example 9 | Comp. Ex. 5 |
|---|---|---|---|
| Kind of urethane bond at crosslinking point | Aromatic OH + aliphatic NCO | Aromatic OH + aliphatic NCO | none |
| Urethane bond amount at crosslinked point (% in total urethane bond) | 2.9 | 2.9 | 0 |
| Heat setting (%) 120°C 130°C 140°C | 35 45 54 | 39 48 59 | 59 70 85 |

Table 5 (continued)

|  | Example 8 | Example 9 | Comp. Ex. 5 |
|---|---|---|---|
| 145°C | 62 | 69 | 89 |
| 150°C | 90 | 91 | 95 |
| 155°C | 98 | 97 | 100 |
| Elastic recovery (%) | 24 | 21 | 10 |
| Elastic recovery (%) after heat setting (setting temp.) | 21 (150°C) | 18 (150°C) | 3 (140°C) |

As is evident from Tables 3 and 4, the polyurethanes of Examples 1 to 7 have high elastic recovery rates, and particularly shows a small decrease of the elastic recovery rate after a heat treatment that corresponds to a heat setting step. Compared with Comparative Examples 1 and 2 which are polyurethanes generally described as having high heat setting rates, the polyurethanes of Examples 1 to 7 show, above a certain temperature, a high heat setting rate comparable to that in Comparative Examples 1 and 2, which is specifically not less than 150°C when the urethane bonds at the crosslinked point is of aromatic OH and aliphatic NCO, and not less than 140°C when the urethane bonds at the crosslinked point is of aromatic OH and benzylic NCO. The same can be said from the elastic fibers (Examples 8 and 9, and Comparative Example 5) of Table 5.

As is clear form the above explanation, the polyurethane of the present invention is superior in elastic recovery and the urethane bonds forming the crosslinked points reversibly dissociate and bond, beyond a certain temperature. Consequently, it is possible to manufacture, from this polyurethane, an elastic fiber which has a high heat setting rate above a certain temperature, and which has elastic recovery after a heat setting process which is as superior as the elastic recovery before the heat setting process.

## Claims

1. A polyurethane comprising a high molecular weight polyol, an organic polyisocyanate, and a low molecular weight polyol, and having a crosslinked structure, wherein bonds which form crosslinked points within the polyurethane comprise at least one type of urethane bond from urethane bonds formed by a reaction of aromatic hydroxyl groups and aliphatic isocyanato groups, or urethane bonds formed by a reaction of aromatic hydroxyl groups and benzylic isocyanato groups, a proportion of the urethane bonds being 0.1-50% of all the urethane bonds in the polyurethane.

2. A polyurethane according to claim 1, comprising as a polymerization component a multifunctional compound having two aliphatic hydroxyl groups and at least one aromatic hydroxyl group.

3. A polyurethane according to claim 1, wherein one component of the low molecular weight polyol is a multifunctional compound having two aliphatic hydroxyl groups and at least one aromatic hydroxyl group.

4. A polyurethane according to claim 1, wherein the bonds forming the crosslinked points within the polyurethane comprise urethane bonds formed by a reaction of the aromatic hydroxyl groups and the aliphatic isocyanato groups, or urethane bonds formed by a reaction of aromatic hydroxyl groups and benzylic isocyanato groups.

5. A polyurethane according to one of claims 1 to 4, wherein the proportion of the urethane bonds at the crosslinked points of the polyurethane is 0.2 to 15% of the total urethane bonds of the polyurethane.

6. An elastic fiber produced from a polyurethane according to any one of claims 1 to 5.

7. An elastic fiber according to claim 6 manufactured by melt spinning.

## INTERNATIONAL SEARCH REPORT

| | International application No. |
|---|---|
| | PCT/JP00/02177 |

| A. CLASSIFICATION OF SUBJECT MATTER |
|---|
| Int.Cl$^7$  C08G18/65, D01F6/70 |
| According to International Patent Classification (IPC) or to both national classification and IPC |

| B. FIELDS SEARCHED |
|---|
| Minimum documentation searched (classification system followed by classification symbols) |
| Int.Cl$^7$  C08G18/65, D01F6/70 |
| Documentation searched other than minimum documentation to the extent that such documents are included in the fields searched |
| Electronic data base consulted during the international search (name of data base and, where practicable, search terms used)<br>CAS |

| C. DOCUMENTS CONSIDERED TO BE RELEVANT |
|---|

| Category* | Citation of document, with indication, where appropriate, of the relevant passages | Relevant to claim No. |
|---|---|---|
| E,X | JP, 2000-109534, A (Toyobo Co., Ltd.),<br>18 April, 2000 (18.04.00),<br>Claims<br>(Family: none) | 1-7 |
| X | JP, 8-158155, A (Toyobo Co., Ltd.),<br>18 June, 1996 (18.06.96),<br>Full text<br>(Family: none) | 1-7 |
| X | JP, 8-120047, A (Toyobo Co., Ltd.),<br>14 May, 1996 (14.05.96),<br>Full text<br>(Family: none) | 1-7 |
| A | JP, 48-58095, A (Kanegafuchi Boseki K.K.),<br>15 August, 1973 (15.08.73),<br>Claims<br>(Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 July, 2000 (18.07.00) | Date of mailing of the international search report<br>01 August, 2000 (01.08.00) |
|---|---|
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| | International application No. |
|---|---|
| | PCT/JP00/02177 |

C (Continuation). DOCUMENTS CONSIDERED TO BE RELEVANT

| Category* | Citation of document, with indication, where appropriate, of the relevant passages | Relevant to claim No. |
|---|---|---|
| A | JP, 7-70278, A (BASF AG), 14 March, 1995 (14.03.95), Claims & EP, 629721, A2 & CA, 2121996, A | 1-7 |
| A | JP, 7-292063, A (Toyobo Co., Ltd.), 07 November, 1995 (07.11.95), Claims (Family: none) | 1-7 |

Form PCT/ISA/210 (continuation of second sheet) (July 1992)

13